# EUROPEAN PATENT SPECIFICATION

(11) **EP 2 657 207 B1**
(45) Date of publication and mention of the grant of the patent: **01.06.2022**
(21) Application number: 13164935.2
(22) Date of filing: 23.04.2013
(51) Int. Cl.: C04B 35/565, C04B 35/573, C04B 35/626, C04B 35/80

(54) **Method of producing a melt-infiltrated ceramic matrix composite article**
Verfahren zur Herstellung eines schmelzinfiltrierten keramischen Matrixverbundstoffartikels
Procédé de production d'un article composite à matrice céramique infiltrée par une fusion

(30) Priority: 27.04.2012 US 201261639629 P; 06.12.2012 US 201213706731
(43) Date of publication of application: 30.10.2013
(73) Proprietor: General Electric Company, Schenectady, NY 12345 (US)
(72) Inventor: Gray, Paul Edward, Newark, DE 19713-3432 (US)
(74) Representative: Openshaw & Co.

(56) References cited:
- EP-A1- 1 676 824
- EP-A1- 2 248 786
- WO-A2-2013/103469
- CA-A1- 2 089 277
- CN-A- 102 424 597
- JP-A- H0 881 275
- US-A1- 2004 191 411

## Description

The present invention generally relates to ceramic matrix composite (CMC) articles and processes for their production. More particularly, this invention is directed to a process of producing a silicon-containing CMC article by melt infiltration of a porous preform that was produced with the use of a matrix slurry composition capable of promoting the infiltration of the preform.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. CMC materials are a notable example because their high temperature capabilities can significantly reduce cooling air requirements. CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC in the event of a matrix crack. In turn, the ceramic matrix protects the reinforcement material, maintains the orientation of its fibers, and serves to dissipate loads to the reinforcement material. Individual fibers (filaments) are often coated with a release agent, such as boron nitride (BN) or carbon, to form a weak interface or de-bond layer that allows for limited and controlled slip between the fibers and the ceramic matrix material. As cracks develop in the CMC, one or more fibers bridging the crack act to redistribute the load to adjacent fibers and regions of the matrix material, thus inhibiting or at least slowing further propagation of the crack.

Of particular interest to many high-temperature applications are silicon-based composites, such as silicon carbide (SiC) as the matrix and/or reinforcement material. Notable examples of CMC materials and particularly SiC/Si-SiC (fiber/matrix) continuous fiber-reinforced ceramic composites (CFCC) materials and processes are disclosed in U.S. Patent Nos. 5,015,540, 5,330,854, 5,336,350, 5,628,938, 6,024,898, 6,258,737, 6,403,158, and 6,503,441, and U.S. Patent Application Publication No. 2004/00673 16. EP2248786 discloses a process for producing a silicon-containing CMC article comprising a ceramic reinforcement material in a solid matrix from which elemental silicon and/or silicon alloy is sufficiently removed to enable the CMC article to withstand high temperatures. JP H 088 1275 A discloses a method for producing SiC-based fiber composite materials with less thermal degradation of ceramic fibers during production. Such processes generally entail the fabrication of CMCs using multiple prepreg layers, each in the form of a "tape" comprising the desired ceramic fiber reinforcement material, one or more precursors of the CMC matrix material, and one or more organic resin binders that promote the pliability of the tapes. According to conventional practice, prepreg tapes can be formed by impregnating the reinforcement material with matrix slurry that contains the ceramic precursor(s) and binder(s). Preferred precursor materials will depend on the particular composition desired for the ceramic matrix of the CMC component, for example, SiC powder and a carbon and/or carbon-containing particulate material, for example, carbon black, if the desired matrix material is SiC. Other typical slurry ingredients include solvents, also called solvent vehicles, for the binders to promote the fluidity of the slurry to enable impregnation of the fiber reinforcement material.

After allowing the matrix slurry to partially dry and, if appropriate, partially curing the binders (B-staging), the resulting tape is laid-up with other tapes, debulked and, if appropriate, cured while subjected to elevated pressures and temperatures to produce a cured prepreg preform. The preform is then heated (fired) in a vacuum or inert atmosphere to remove solvents, decompose the binders, and convert the precursor to the desired carbon-containing ceramic matrix material, yielding a fired porous preform that is ready for melt infiltration. During melt infiltration, silicon and/or a silicon alloy is typically applied externally to the porous preform and melted, and the molten silicon and/or silicon alloy infiltrates into the porosity of the preform. A portion of the molten silicon is reacted with elemental carbon present in the porous preform, such as the aforementioned carbon black originally present in the slurry as a precursor, and/or any carbon char formed by pyrolysis of organic binders. The molten silicon and carbon black react to form additional silicon carbide that fills the porosity to yield the final CMC component.

Specific processing techniques and parameters for the above process will depend on the particular composition of the materials. Conventional melt infiltration conditions for the production of CMC components require a carefully controlled atmosphere in terms of both pressure and content of the atmosphere to remove excess carbon, which can cause excessive and undesirable outgassing during melt infiltration. Consequently, melt infiltration is typically performed in a controlled furnace atmosphere, necessitating the use of batch operations that increase production costs. Attempts to infiltrate preforms by immersion in molten silicon without atmosphere control have required extended treatments (for example, eight hours or more) and resulted in unacceptable preforms having an infiltrated shell surrounding an un-infiltrated core. This is a direct result of a phenomenon called "choking." Choking is a term used to denote a condition in which infiltration coupled with reaction of the molten silicon with carbon black in the preform leads to SiC formation in such a way that pore radii are reduced making further infiltration difficult or completely halting all further infiltration.

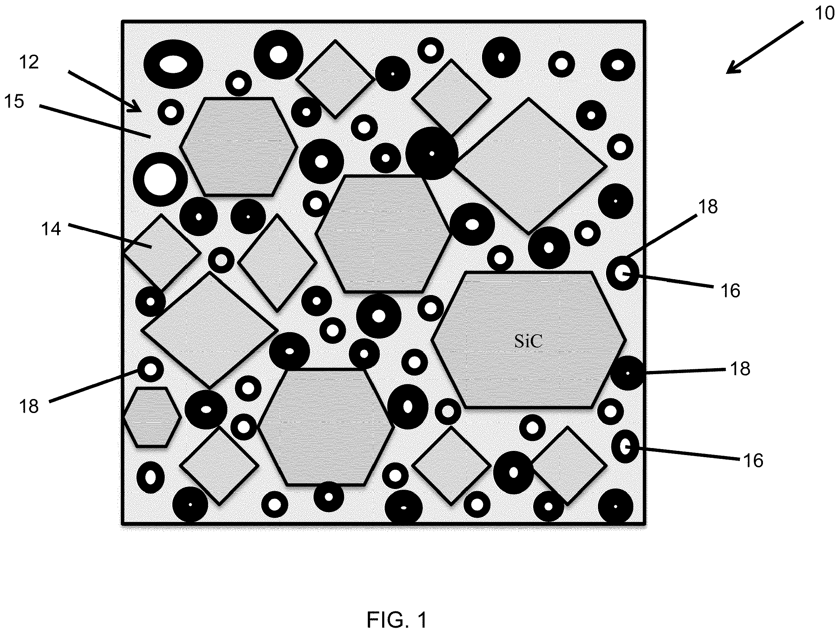

This phenomenon of inhibited infiltration due to excessive formation of SiC utilizing the carbon black present in the preform is illustrated in FIG. 1, which schematically represents a portion of a fired porous preform 10 that has been fabricated in accordance with the prior art. The depiction shown in Fig 1 represents a snap-shot at a moment after the melt infiltration has begun. The portion of the preform 10 comprises a matrix 12 that contains SiC particles 14 and as yet unreacted carbon 15. For the purpose of producing a CMC article, the matrix 12 would also surround a fiber reinforcement material, which is not shown in FIG. 1 the preform are also intended to encompass the presence of a fiber reinforcement material). The matrix 12 is further represented as containing porosity in the form of pores 16 that formed as a result of decomposition of the resinous binders during firing. FIG. 1 also schematically represents the effect of melt infiltration, during which additional SiC 18 forms on the surfaces of the pores 16 as a result of molten silicon (not shown) reacting with carbon black within the matrix 12. As represented in FIG. 1, the additional SiC 18 can significantly reduce the cross-sectional areas of the pores 16, which slow and may even prevent further infiltration by the molten silicon. Such choking is a result of two main characteristics in processes of the type described above: use of carbon black or high carbon content in the matrix slurry which reduces the porosity needed for infiltration, and the rapid reaction of the carbon with the molten silicon, forming the additional SiC 18 which inherently has a higher molar volume than silicon. As mentioned above, another limiting aspect of the prior art is that preforms produced with conventional matrix slurry materials require controlled pressures and atmospheres during melt infiltration to achieve good surface wetting and full melt infiltration. It is generally known that the presence of unreacted carbon and the existence of unfilled porosity remaining after the melt infiltration process as a result of choking have an adverse effect on the mechanical properties of the CMC article resulting from the phenomenon illustrated in Fig 1.

Accordingly, there is a desire for improved methods capable of producing melt-infiltrated CMC components. These methods would be preferably capable of achieving substantial improvements in infiltration speed and completeness, as well as reduce or eliminate the need for carefully controlled pressures and atmospheres to control outgassing during melt infiltration. Addressing both of these issues would provide the possibility for substantial improvement in the robustness of the CMC article and reduce processing costs.

The present invention provides a method of producing a porous composite preform that can be melt infiltrated by direct immersion in or exposure to molten silicon, preferably at relatively high infiltration speeds and preferably without requiring the use of a controlled pressure or atmosphere during infiltration.

According to a first aspect of the invention, a method is provided according to claim 1.

A beneficial effect of the invention is that the porous preform has a resultant porosity that promotes a more rapid infiltration. Speedy infiltration is achieved by a porous structure that contains a controlled amount of carbon char content that is less prone to choking during melt infiltration and does not lead to significant blockage during melt infiltration. Instead, a preferred aspect of the invention is the ability to yield a pore structure in which SiC formed by reaction with particulate carbon is absent in the preform, and in which spaces between SiC matrix formed otherwise contain threads of resin-derived carbon char and porosity. A surprising and unexpected beneficial effect of the invention is the ability to eliminate the need for a controlled atmosphere of a type usually required due to the high amount of carbon (as resin and carbon black) in the matrix slurry composition. Another beneficial effect resulting from the invention is that there appears to be a more controlled formation of SiC resulting from the reaction between molten silicon and the resin-derived carbon char, as compared to that which occurs between molten silicon and carbon black or other particulate carbon that is intentionally present in the prior art. The more controlled formation of SiC made possible with the invention is believed to also reduce the likelihood of choking. Yet another beneficial effect is that the resulting porosity appears to promote infiltration as a result of exhibiting unique connectivity, believed to be due to the way that the SiC is exclusively formed from molten silicon and the carbon char.

Other aspects and advantages of the invention will be better appreciated from the following detailed description.
FIG. 1 schematically represents a porous geometry of a portion of a preform (at a moment during the melt infiltration process) that is typical of prior art processes where carbon black is a component of a matrix slurry used to produce the preform. As illustrated, the porosity within the preform is inadequate for speedy infiltration due to channels being substantially blocked, leading to the phenomenon referred to herein as choking during melt infiltration.

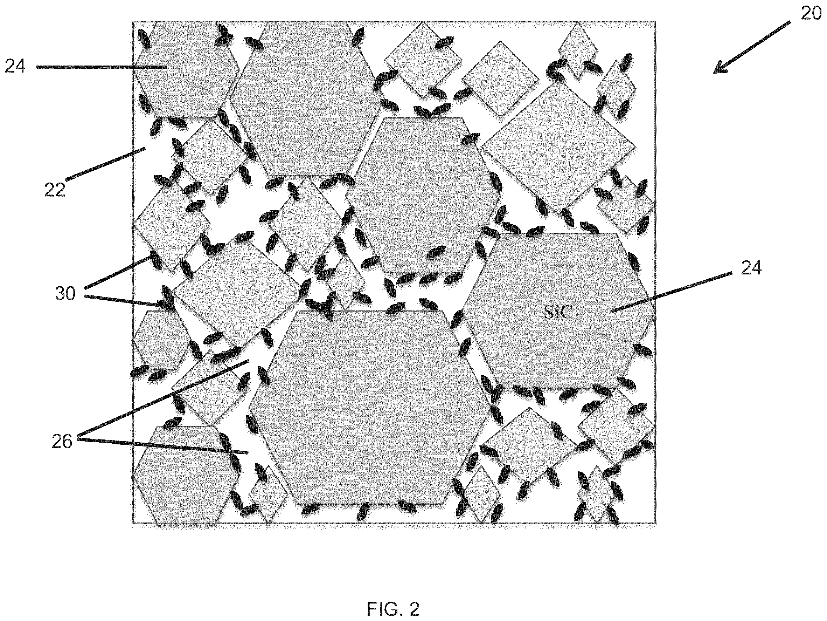

FIG. 2 schematically represents a porous geometry of a portion of a preform (immediately preceding the infiltration process) produced from a matrix slurry that does not contain carbon black in accordance with an embodiment of the invention, and depicts a desirable porosity and minimal blockage in that it would not tend to promote choking.

The present invention will be described in terms of processes for producing CMC articles through melt infiltration techniques performed on a porous preform to yield a matrix containing SiC. According to a preferred aspect of the invention, the preform is produced by firing a prepreg preform formed by impregnating a fiber reinforcement material with a matrix slurry composition that contains one or more ceramic precursors. The slurry composition is formulated to reduce the tendency for the reaction of the ceramic precursors to inhibit ("choke-off") the subsequent infiltration of molten silicon into the fired porous preform during a melt infiltration process, so that the molten silicon is able to more quickly infiltrate the porous preform. In addition, melt infiltration of the preform preferably does not require a carefully controlled atmosphere or pressure to achieve full infiltration. Instead, the preform can be melt infiltrated in a protective atmosphere, for example, flowing argon, instead of a controlled furnace atmosphere. Furthermore, with some embodiments of the invention, it is possible for melt infiltration to be completed in as little as two to ten minutes.

Matrix slurry compositions of the present invention contain a SiC powder as at least one precursor for the SiC matrix of the CMC component. The slurry composition may contain the SiC powder at higher contents than is conventional as a replacement for carbon and/or carbon-containing particulate (for example, carbon black), which the slurry composition does not contain.

As a particular example, the slurry composition may contain, by weight, more than 70% SiC powder as one of the solids in the slurry composition. The slurry composition contains no carbon particulate. A suitable but nonlimiting particle size range for the SiC powder is about 10 micrometers or less.

The matrix slurry composition contains two or more primary resin binders that not only serve as a binder for the prepreg preform prior to firing to form the porous preform, but also as a precursor to char that constitutes the sole source of elemental carbon in the porous preform after the prepreg preform is fired. The slurry composition preferably contains a solvent for the primary resin binders to promote the fluidity of the matrix slurry composition and promote impregnation of the fiber reinforcement material to yield the prepreg preform. The slurry composition may also contain one or more pore formers and/or catalysts. If present, the pore former may be a resin that also serves as a binder for the prepreg preform, but does not contribute to char formation in the porous preform or contributes to char formation to a much lesser extent than the primary resin binders. For reasons discussed below, the primary resin binders and any pore former(s) preferably have an effective char yield range of at least 9.5 up to about 25%.

As a nonlimiting example, a suitable matrix slurry composition produced during an investigation leading to the present invention contained, in weight percent, about 78% SiC powder, about 15% resin binder(s), and 7% pore former(s). For purposes of clarity, only the proportion of the SiC powder, primary resin binder and pore former are indicated, and the amount of any desired solvent is omitted and determination of the amount of solvent suitable for inclusion in the slurry composition is within the capability of those skilled in the art. Upon firing, this particular composition resulted in a matrix material containing, by volume, about 53% SiC, about 16% char (elemental carbon), and the remainder essentially porosity. The slurry composition contains an amount of primary resin binder(s) that is sufficient to yield a char content in the matrix of the porous preform of, by volume, about 7% to about 30%. Char yields less than 9.5% may not produce the desired minimum amount of char content in the preform 20 while char yields exceeding 25% may lead to unreacted carbon in the matrix which is undesirable form the standpoint of mechanical strength of the CMC. Thus, the primary resin binders and any pore former(s) preferably have an effective char yield range of at least 9.5 up to about 25%. These percentages are for the matrix of the preform excluding the fiber reinforcement material. Further, the matrix slurry composition is preferably tailored to result in at least 45% by volume of SiC in the porous preform, with a preferred upper limit being about 80% by volume. Aside from the reinforcement material, SiC powder, and char content, the balance of the porous preform following burnout is preferably essentially porosity, for example, at least 20% and more preferably on the order of about 25 volume percent or more. Carbon particulate is eliminated from the matrix slurry composition.

Primary resin binders useful in the invention are carbon-yielding resins such as thermosetting furan (C₄H₄O) -based resins, though it is foreseeable that other resins could be used, for example, phenolics, novolacs, polyester or epoxies, if their volumetric percentages for char yield and porosity can be used to attain the char content and porosity noted above. Two or more resins are used to attain char contents and porosities within the ranges prescribed for the invention. In the invention, one of the resins has a char yield of 30 to 70% and is the predominant source of carbon char in the porous preform, while a second primary resin binder has a char yield of 0 to 10% and predominantly serves as a binder in the prepreg preform and produce porosity in the fired porous preform without being a significant source of carbon char. In this case, the first resin may be considered the primary resin binder in the slurry composition, while the second is considered to be a pore former. The resins and their amounts in the slurry composition can be chosen on the basis of having an effective (combined) char yield capable of attaining the char content and porosity within the ranges prescribed for the invention. Furthermore, it may be practical to select the resins on the basis of having different burnout temperatures, such that carbon char forms at varying temperatures within the preform to provide another parameter that can be exploited in order to achieve desired porosity conditions at a given stage of the process.

Appropriate selection of the primary resin binders and any pore former can serve to control the reaction so that large amounts of SiC are not formed quickly during melt infiltration with molten silicon, which if allowed to occur would promote blockage of the internal porosity within a preform due to the increased molar volume of SiC over silicon. The reaction control referred above can be accomplished by effecting a gradual formation of char from the primary resin binders, rather than having a significant amount of particulate carbon readily available in the slurry compositions that is believed to promote rapid and excessive formation of SiC within the porosity of the preform. Another preferred and desirable aspect of providing all available elemental carbon in the preform as carbon char produced by decomposing the primary resin binders is that the resultant char has been found to be discontinuous or otherwise present in a form such that the resultant porosity is maintained more open than is believed to have been previously possible with the use of prior art slurries containing carbon particulate.

Consequently, a preferred aspect of the invention is to select two or more primary resin binders and any pore formers for use in a matrix slurry composition such that it/they generate(s) a controlled amount of carbon char and open porosity within a porous preform that is capable of promoting infiltration by molten silicon as a result of inhibiting choking during infiltration. Such a result is schematically represented in FIG. 2, which shows a portion of a fired porous preform 20 (at a stage immediately preceding the infiltration process) comprising a matrix 22 that contains SiC particles 24 (the fiber reinforcement material is not shown). The matrix 22 is further represented as containing interconnected porosity 26. FIG. 2 also schematically represents thread-like and discontinuous carbon char 30 resulting from the firing process, during which the primary resin binder has been converted to char that will react during a subsequent melt infiltration process to produce additional SiC (not shown) within the porosity 26. As represented in FIG. 2, the carbon char 30 does not significantly reduce the cross-sectional areas of the porosity 26, which would inhibit infiltration by molten silicon. Such a result is contrary to the scenario schematically represented in FIG. 1, which shows restricted porosity as a result of the prepreg preform having contained both carbon particulate and carbon char prior to infiltration in accordance with prior practices. Instead, FIG. 2 represents porosity 26 within the matrix 22 containing only carbon char 30 predominantly formed during burnout of the primary resin binders in accordance with a preferred aspect of the invention. It is believed that the resulting carbon char 30 advantageously has a thread-like appearance that further inhibits choking.

The volumetric ratios of the SiC powder, char-forming primary resin binders, and pore former(s) (if present), are preferably controlled so that the porous preform 20 does not suffer from choking during silicon melt infiltration and does not require a controlled atmosphere or pressure to achieve infiltration, as has been required for preforms infiltrated with previous slurry compositions containing carbon and/or carbon-containing particulate, for example, carbon black. The need for performing the melt infiltration in a controlled atmosphere is eliminated with the compositions described here because of the complete absence of the particulate carbon in the slurry composition used to produce the prepreg preform that undergoes firing, and consequently the resulting porous preform 20 that undergoes melt infiltration. Further, it is believed that the carbon char 30 produced with the primary resin binders is much more reactive than particulate carbon employed in prior art matrix slurry compositions. As an example, it may be possibly to simply immerse the porous preform 20 in molten silicon under an inert (for example, argon or nitrogen) blanket at low pressures, for example, 30 torr (about 40 millibar) or less above atmospheric pressure. The preform 20 is capable of being quickly infiltrated, potentially in as little as about two to ten minutes, in contrast to the more typical forty minutes or more required for preforms produced with conventional slurry compositions.

A beneficial effect of the invention is that, by eliminating the need for carbon-containing particulate in the slurry composition and compensating for the absence of carbon-containing particulate by deriving sufficient carbon char from the two or more primary resin binders, it is believed that an optimized pore structure can be obtained that facilitates a more rapid infiltration without the undesirable choking phenomenon observed with prior prepreg materials. Another preferred aspect of this invention is the ability to eliminate the need for using a controlled atmosphere during melt infiltration, which allows a preform to be infiltrated by direct union with molten silicon (or a silicon-containing alloy) using a high volume process, for example, immersion in molten silicon or a continuous tunnel furnace. Additionally, labor and cost associated with preform lay-up tooling for use in a controlled-atmosphere process may also be eliminated.

The slurry composition contains 5 to 25 weight percent of a first primary resin binder that has a relatively high carbon char yield, 30 to 70%, and 2 to 20 weight percent of a second primary resin binder that has a relatively low carbon char yield, of 0 to 10%. If the char yield of the second primary resin binder is at or near 0%, it may be considered a pore former if it predominantly serves as a binder in the prepreg preform and produces porosity in the fired porous preform 20 without being a significant source of the carbon char 30.

The char yield of a resin can be determined by heating a specimen of cured resin in an inert or vacuum atmosphere to a sufficiently elevated temperature, for example, above 500°C, and then determining the percentage of residue left from the original specimen. Those skilled in the art will appreciate that typical furan, novolac and phenolic resins have char yields near 50%, whereas resins such as epoxies and polyesters have lower char yields, for example, in a range of about 20 to about 40%. By calculation and knowledge of the char yield, one can determine preferred ratios for amounts of two or more primary resin binders, optionally any pore former, and the SiC powder to be combined in the slurry composition to produce a matrix material which can be melt infiltrated under a wide variety of pressures and atmospheres in much less time.

It is to be recognized that the underlying principle of this invention can be practiced by those skilled in the art in several different forms. For example, the two or more resins may achieve an effective carbon char yield of 9.5 to 25%, which can be varied by judicious choices of the types and amounts of resins based on their individual carbon char yields and/or their proportions in the slurry composition.

Table 1 below shows, by way of example, some selected variations of this principle, identifying certain resins, their carbon char yields, and resin amounts (in weight percents, ignoring solvents and any catalysts) believed to be capable of promoting infiltration rates in porous preforms. Compositions 1, 2, 4 and 5 are examples according to the invention while Composition 3 is a reference example not according to the present invention. In these examples, the "resin" is effectively a first primary resin binder and the "pore former" is effectively a second primary resin binder in the slurry that, due to its char yield, meets the definition used herein for a "pore former." The examples in Table 1 also report suitable amounts of SiC powder that can be used in combination with the resins. It should be recognized that an additional benefit of this invention is that adequate amounts of pore formers can be used as binders in the prepreg preform without perhaps an undesired concomitant increase in carbon content. Thus benefits of the current invention can be seen to include smoother unperturbed melt infiltration by avoiding or at least minimizing one or more of the root causes of the choking phenomenon. Another notable benefit of the current invention is that eliminating the presence of carbon particulate in the slurry can reduce or completely eliminate the need for a controlled or special atmosphere during preform melt infiltration of the preform.

**TABLE 1**

| Composition Example | Resin | Resin % | Resin Char Yield, % | Pore Former | Pore Former % | Pore Former Char Yield, % | SiC Type | SiC Powder, % |
|---|---|---|---|---|---|---|---|---|
| 1 | Furfuryl Alcohol | 17 | 50 | Polyvinyl Butyral | 4 | 0 | <10 um | 78 |
| 2 | Phenolic | 17 | 50 | Polyvinyl Butyral | 4 | 0 | <10 um | 78 |
| 3 | Epoxy | 21 | 35 | none | 0 | na | <10 um | 78 |
| 4 | Furfuryl Alcohol | 17 | 50 | Poly methyl methacrylate | 4 | 0 | <10 um | 78 |
| 5 | Phenolic | 17 | 50 | Poly methyl methacrylate | 4 | 0 | <10 um | 78 |
| | | | | | | | | |

While the invention has been described in terms of specific embodiments, it is apparent that other forms could be adopted by one skilled in the art. Accordingly, it should be understood that the invention is not limited to the specific disclosed embodiments. Therefore, the scope of the invention is to be limited only by the following claims.

## Claims

1. A method of forming a CMC article, the method comprising:
producing a matrix slurry composition that contains at least two resin binders, the at least two resin binders comprising a first primary resin binder having a carbon char yield of 30 to 70% and a second primary resin binder having a carbon char yield of 0 to 10%, the matrix slurry composition further comprising a SiC powder (24) and the matrix slurry composition does not contain any carbon particulate, the SiC powder being a precursor for a SiC matrix (22) of the CMC article and the at least two resin binders being a precursor for a carbon char (30) of the SiC matrix, wherein the matrix slurry composition contains 5 to 25 weight percent of the first primary resin binder, and 2 to 20 weight percent of the second primary resin binder;
impregnating a fiber reinforcement material with the matrix slurry composition to yield a preform (20);
heating the preform to form a porous preform (20) that contains the SiC matrix and porosity and to convert the at least two resin binders to the carbon char (30) that is present within the porosity (26); and
melt infiltrating the porosity (26) within the porous preform (20) with molten silicon or a molten silicon-containing alloy to react the carbon char (30) and form silicon carbide that at least partially fills the porosity (26) within the porous preform (20);
wherein the carbon char (30) constitutes essentially all of the elemental carbon in the porous preform (20).

2. The method according to claim 1, wherein the matrix slurry composition contains a sufficient amount of the SiC powder (24) to yield a SiC content of, by volume, 45 to 80% in the matrix (22) of the porous preform (20).

3. The method according to either of claim 1 or 2, wherein the SiC powder (24) constitutes more than 70 weight percent of a combined amount of the at least two resin binders and the SiC powder (24) in the matrix slurry composition.

4. The method according to any of the preceding claims, wherein the first primary resin binder is chosen from the group consisting of furans, phenolics, novolacs, polyesters, and epoxies.

5. The method according to any of the preceding claims, wherein the porous preform (20) consists essentially of the SiC matrix (22), the carbon char (30), and the porosity (26).

6. The method according to claim 4, wherein the porosity (26) constitutes 20 volume percent or more of the porous preform (20).

7. The method according to any of the preceding claims, wherein the matrix slurry composition further contains one or more pore formers, catalysts, and resin solvents to promote the fluidity of the matrix slurry composition and promote impregnation of the fiber reinforcement material.

8. The method according to claim 7, wherein the pore former serves substantially as a binder in the preform (20) and not as a source of carbon char (30) in the porous preform.

9. The method according to any of the preceding claims, wherein the resin binders generate carbon char (30) at different temperatures.

10. The method according to any of the preceding claims, wherein the melt infiltration step is performed in an inert atmosphere.

## Patentansprüche

1. Verfahren zum Ausbilden eines CMC-Erzeugnisses, wobei das Verfahren Folgendes umfasst:
Herstellen einer Matrixaufschlämmungszusammensetzung, die wenigstens zwei Harzbindemittel enthält, wobei die wenigstens zwei Harzbindemittel ein erstes primäres Harzbindemittel, das eine Kohlenstoffkohleausbeute von 30 bis 70 % aufweist, und ein zweites primäres Harzbindemittel umfassen, das eine Kohlenstoffkohleausbeute von 0 bis 10 % aufweist, wobei die Matrixaufschlämmungszusammensetzung ferner ein SiC-Pulver (24) umfasst und die Matrixaufschlämmungszusammensetzung keine Kohlenstoffpartikel enthält, wobei das SiC-Pulver ein Vorläufer für eine SiC-Matrix (22) des CMC-Erzeugnisses ist und die wenigstens zwei Harzbindemittel ein Vorläufer für eine Kohlenstoffkohle (30) der SiC-Matrix sind, wobei die Matrixaufschlämmungszusammensetzung 5 bis 25 Gew.-% des ersten primären Harzbindemittels und 2 bis 20 Gew.-% des zweiten primären Harzbindemittels enthält;
Imprägnieren eines Faserverstärkungsmaterials mit der Matrixaufschlämmungszusammensetzung, um eine Vorform (20) zu ergeben;
Erhitzen der Vorform, um ein poröse Vorform (20) auszubilden, die die SiC-Matrix und Porosität enthält, und um die wenigstens zwei Harzbindemittel in die Kohlenstoffkohle (30) umzuwandeln, die innerhalb der Porosität (26) vorhanden ist; und
Schmelzinfiltrieren der Porosität (26) innerhalb der porösen Vorform (20) mit geschmolzenem Silicium oder einer geschmolzenen siliciumhaltigen Legierung, um die Kohlenstoffkohle (30) umzusetzen und Siliciumcarbid auszubilden, das die Porosität (26) innerhalb der porösen Vorform (20) wenigstens teilweise füllt;
wobei die Kohlenstoffkohle (30) im Wesentlichen den gesamten elementaren Kohlenstoff in der porösen Vorform (20) ausmacht.

2. Verfahren nach Anspruch 1, wobei die Matrixaufschlämmungszusammensetzung eine ausreichende Menge des SiC-Pulvers (24) enthält, um einen SiC-Gehalt von 45 bis 80 Vol.-% in der Matrix (22) der porösen Vorform (20) zu ergeben.

3. Verfahren nach Anspruch 1 oder 2, wobei das SiC-Pulver (24) mehr als 70 Gew.-% einer kombinierten Menge der wenigstens zwei Harzbindemittel und des SiC-Pulvers (24) in der Matrixaufschlämmungszusammensetzung ausmacht.

4. Verfahren nach einem der vorangehenden Ansprüche, wobei das erste primäre Harzbindemittel aus der Gruppe ausgewählt ist, die aus Furanen, Phenolen, Novolaken, Polyestern und Epoxiden besteht.

5. Verfahren nach einem der vorangehenden Ansprüche, wobei die poröse Vorform (20) im Wesentlichen aus der SiC-Matrix (22), der Kohlenstoffkohle (30) und der Porosität (26) besteht.

6. Verfahren nach Anspruch 4, wobei die Porosität (26) 20 Vol.-% oder mehr der porösen Vorform (20) ausmacht.

7. Verfahren nach einem der vorangehenden Ansprüche, wobei die Matrixaufschlämmungszusammensetzung ferner einen oder mehrere Porenbildner, Katalysatoren und Harzlösungsmittel enthält, um die Fließfähigkeit der Matrixaufschlämmungszusammensetzung zu fördern und die Imprägnierung des Faserverstärkungsmaterials zu fördern.

8. Verfahren nach Anspruch 7, wobei der Porenbildner im Wesentlichen als ein Bindemittel in der Vorform (20) und nicht als eine Quelle von Kohlenstoffkohle (30) in der porösen Vorform dient.

9. Verfahren nach einem der vorangehenden Ansprüche, wobei die Harzbindemittel Kohlenstoffkohle (30) bei unterschiedlichen Temperaturen erzeugen.

10. Verfahren nach einem der vorangehenden Ansprüche, wobei der Schmelzinfiltrationsschritt in einer inerten Atmosphäre durchgeführt wird.

## Revendications

1. Procédé de formation d'un article de CMC, le procédé comprenant :
la production d'une composition de bouillie de matrice qui contient au moins deux liants de résine, les au moins deux liants de résine comprenant un premier liant de résine primaire ayant un rendement de charbon de carbone de 30 à 70 % et un second liant de résine primaire ayant un rendement de charbon de carbone de 0 à 10 %, la composition de bouillie de matrice comprenant en outre une poudre de SiC (24) et la composition de bouillie de matrice ne contenant aucune particule de carbone, la poudre de SiC étant un précurseur pour une matrice de SiC (22) de l'article de CMC et les au moins deux liants de résine étant un précurseur pour un charbon de carbone (30) de la matrice SiC, la composition de bouillie de matrice contenant 5 à 25 % en poids du premier liant de résine primaire, et 2 à 20 % en poids du second liant de résine primaire ;
l'imprégnation d'un matériau de renforcement fibreux avec la composition de bouillie de matrice pour produire une préforme (20) ;
le chauffage de la préforme pour former une préforme poreuse (20) qui contient la matrice de SiC et la porosité et pour convertir les au moins deux liants de résine en charbon de carbone (30) qui est présent dans la porosité (26) ; et
la fusion infiltrant la porosité (26) à l'intérieur de la préforme poreuse (20) avec du silicium fondu ou un alliage contenant du silicium fondu pour faire réagir le charbon de carbone (30) et former du carbure de silicium qui remplit au moins partiellement la porosité (26) à l'intérieur de la préforme poreuse (20) ;
le charbon de carbone (30) constituant essentiellement tout le carbone élémentaire dans la préforme poreuse (20).

2. Procédé selon la revendication 1, dans lequel la composition de bouillie de matrice contient une quantité suffisante de la poudre de SiC (24) pour produire une teneur en SiC, en volume, de 45 à 80 % dans la matrice (22) de la préforme poreuse (20).

3. Procédé selon la revendication 1 ou 2, dans lequel la poudre de SiC (24) constitue plus de 70 % en poids d'une quantité combinée des au moins deux liants de résine et de la poudre de SiC (24) dans la composition de suspension de matrice.

4. Procédé selon l'une quelconque des revendications précédentes, dans lequel le premier liant de résine primaire est choisi dans le groupe constitué de furanes, de composés phénoliques, de novolaques, de polyesters et d'époxy.

5. Procédé selon l'une quelconque des revendications précédentes, dans lequel la préforme poreuse (20) est constituée essentiellement de la matrice SiC (22), du charbon de carbone (30) et de la porosité (26).

6. Procédé selon la revendication 4, dans lequel la porosité (26) constitue 20 % en volume ou plus de la préforme poreuse (20).

7. Procédé selon l'une quelconque des revendications précédentes, dans lequel la composition de bouillie de matrice contient en outre un ou plusieurs porogènes, catalyseurs et solvants de résine pour favoriser la fluidité de la composition de bouillie de matrice et favoriser l'imprégnation du matériau de renforcement fibreux.

8. Procédé selon la revendication 7, dans lequel l'agent porogène sert essentiellement de liant dans la préforme (20) et non de source de charbon de carbone (30) dans la préforme poreuse.

9. Procédé selon l'une quelconque des revendications précédentes, dans lequel les liants de résine génèrent du charbon de carbone (30) à différentes températures.

10. Procédé selon l'une quelconque des revendications précédentes, dans lequel l'étape d'infiltration de fusion est effectuée dans une atmosphère inerte.
